# EUROPÄISCHE PATENTSCHRIFT

(11) **EP 1 273 764 B1**
(45) Veröffentlichungstag und Bekanntmachung des Hinweises auf die Patenterteilung: **20.08.2003**
(21) Anmeldenummer: 01116418.3
(22) Anmeldetag: 06.07.2001
(51) Int. Cl.: F01D 25/16, F16C 27/06

(54) **Turbomaschine**
Turbomachine
Turbomachine

(43) Veröffentlichungstag der Anmeldung: 08.01.2003
(73) Patentinhaber: ATLAS COPCO ENERGAS GMBH, 50999 Köln (DE)
(72) Erfinder: Bosen, Werner Dipl.-Ing., 51143 Köln (DE); Leonhard, Martin, 50321 Brühl (DE)
(74) Vertreter: Albrecht, Rainer Harald, Dr.-Ing.

(56) Entgegenhaltungen:
- US-A- 2 155 919
- US-A- 2 563 778
- US-A- 3 274 955
- US-A- 3 431 035
- US-A- 3 813 826
- US-A- 4 109 979
- US-A- 5 803 612
- PATENT ABSTRACTS OF JAPAN vol. 1999, no. 04, 30. April 1999 (1999-04-30) & JP 11 013756 A (NISSAN MOTOR CO LTD), 22. Januar 1999 (1999-01-22)

## Beschreibung

Die Erfindung betrifft eine Turbomaschine mit einem auf einer Rotorwelle fliegend angeordneten Laufrad und einer Lageranordnung, wobei die Lageranordnung ein Lagergehäuse und einen Wälzlagersatz aus mindestens zwei auf der Rotorwelle angeordneten Wälzlagern aufweist, die mit minimalem Einbauspiel in einem einteiligen zylindrischen Lagerträger angeordnet sind.

Bei dem Laufrad kann es sich um den Rotor eines Turboexpanders handeln, der fliegend an einem Wellenende der Rotorwelle angeschlossen ist, während das andere, abtriebsseitige Wellenende mit einem Verdichterlaufrad bestückt ist oder. einen Generator antreibt. Ebenso kann das Laufrad ein Verdichterlaufrad eines Turboverdichters sein, das fliegend an dem abtriebsseitigen Ende einer Rotorwelle angeschlossen ist, während das antriebsseitige Wellenende über eine Kupplung mit einem Motor verbunden ist oder als Rotor eines direkt angeschlossenen Elektromotors ausgebildet ist oder mit einem Zahnrad eines Getriebes bestückt ist.

Für schnell laufende Turborotoren kommen als Wälzlager Hochgenauigkeitslager in Betracht, die bei höchsten Drehzahlen nur geringe Reibungsverluste erzeugen. Das Produkt aus Drehzahl und Teilkreisdurchmesser kann bei Hochgenauigkeits-Wälzlagern bis zu 2,5 · 10⁶ mm/min betragen. Lageranordnungen mit Hochgenauigkeits-Wälzlagern erlauben zum Beispiel bei Kälteturboexpandern große Expansionsdruckverhältnisse an der Turbinenstufe. Lageranordnungen, die einen Wälzlagersatz aus Hochgenauigkeits-Wälzlagern aufweisen, erreichen allerdings nur dann eine akzeptable Lebensdauer, wenn sie beim Durchfahren von kritischen Drehzahlen während des Starts und des Auslaufs der Turbomaschine ausreichend gedämpft werden. Ferner müssen die Wälzlager mit minimalem Einbauspiel und unter Ausschluss von Montage-Fluchtungsfehlern angeordnet werden. Bereits sehr kleine Fluchtungsfehler oder ein Einbaubeispiel, das Relativbewegungen der Wälzlager des Wälzlagersatzes zulässt, vermindert die Lebensdauer der schnell laufenden Lager erheblich und macht die Funktion dieser Lager zunichte.

Die Druckschrift US 3 813 826 ist eine dem Turbomaschinenbau fernliegende Veröffentlichung. Sie beschreibt eine Schleifmaschine zur Bearbeitung von Glasplattenkanten. Zur Milderung von Stößen, die während des Bearbeitens der Werkstücke auftreten, weist die Schleifmaschine einen Lagerträger auf, der über elastische Elemente am Lagergehäuse abgestützt ist.

Die Druckschrift US 5 803 612 offenbart eine Lageranordnung für Turbomaschinen mit einem Lagerträger. Zur Dämpfung von Schwingungsbewegungen ist zwischen Lagerträger und Lagergehäuse eine ringspaltförmige Kammer vorgesehen, die mit Öl gefüllt ist. Beim Durchlaufen kritischer Drehzahlen ist eine solche Dämpfungsvorrichtung jedoch nicht ausreichend, um eine zufriedenstellende Lebensdauer von Hochgenauigkeits-Wälzlagern zu gewährleisten.

Ausgehend von einer Turbomaschine mit den eingangs beschriebenen Merkmalen liegt der Erfindung die Aufgabe zugrunde, eine wirksame Lagerdämpfung anzugeben, die eine Schädigung der Wälzlager beim Durchlaufen kritischer Rotordrehzahlen verhindert.

Gegenstand der Erfindung und Lösung dieser Aufgabe ist eine Turbomaschine mit einem auf einer Rotorwelle fliegend angeordneten Laufrad und einer Lageranordnung, wobei die Lageranordnung ein Lagergehäuse und einen Wälzlagersatz aus mindestens zwei auf der Rotorwelle angeordneten Wälzlagern aufweist, die mit minimalem Einbauspiel in einem einteiligen zylindrischen Lagerträger angeordnet sind, und wobei der Lagerträger mit einem radialen Montagespalt, der gedämpfte Schwingungsbewegungen zulässt, in einer Lagerbohrung des Lagergehäuses eingesetzt ist und umfangseitig an vorgespannten, elastischen Schwingungsdämpfungselementen abgestützt ist.

Der Lagerträger, der den kompletten Wälzlagersatz aufnimmt, ist ein verhältnismäßig leichtes, aber formstabiles zylindrisches Bauteil, das mit radialem Spiel in einer Bohrung des an die anderen Statorteile der Turbomaschine fest angeschlossenen Lagergehäuses angeordnet ist. Der radiale Bewegungen zulassende Montagespalt zwischen dem Lagerträger und der Bohrung des Lagergehäuses wird erfindungsgemäß zur Schwingungsdämpfung genutzt. Gemäß einer bevorzugten Ausführung der Erfindung sind Elastomerringe als Schwingungsdämpfungselemente zwischen dem Lagerträger und dem Lagergehäuse angeordnet. Sie überbrücken den Montagespalt und gewährleisten eine ausreichende, konzentrische Ausrichtung zwischen dem zylindrischen Lagerträger und der Bohrung des Lagergehäuses und folglich auch zwischen Rotor und Stator der Turbomaschine. Die Elastomerringe dämpfen ferner Schwingungen, die insbesondere dann auftreten, wenn die Rotorwelle beim Anfahren und Abstellen der Turbomaschine einen kritischen Drehzahlbereich durchläuft. Die Dämpfungswirkung ist durch die Anzahl der Elastomerringe, durch die Härte des Elastomermaterials sowie durch die Abmessungen der Elastomerringe veränderbar.

Die Dämpfungswirkung der vorgespannten, elastischen Schwingungsdämpfungselemente kann noch dadurch verstärkt werden, dass der Montagespalt eine Dämpfungsflüssigkeit enthält. In weiterer Ausgestaltung der Erfindung ist daher eine Ölfüllung im Montagespalt zwischen Lagerträger und Gehäuse vorgesehen. Die Abdichtung der Ölfüllung nach außen erfolgt durch die Elastomerringe. Der Montagespalt kann dabei auch eine oder mehrere ringkanalförmige Vertiefungen für die Dämpfungsflüssigkeit aufweisen. Durch das Flüssigkeitspolster kann das Dämpfungsverhalten optimiert werden.

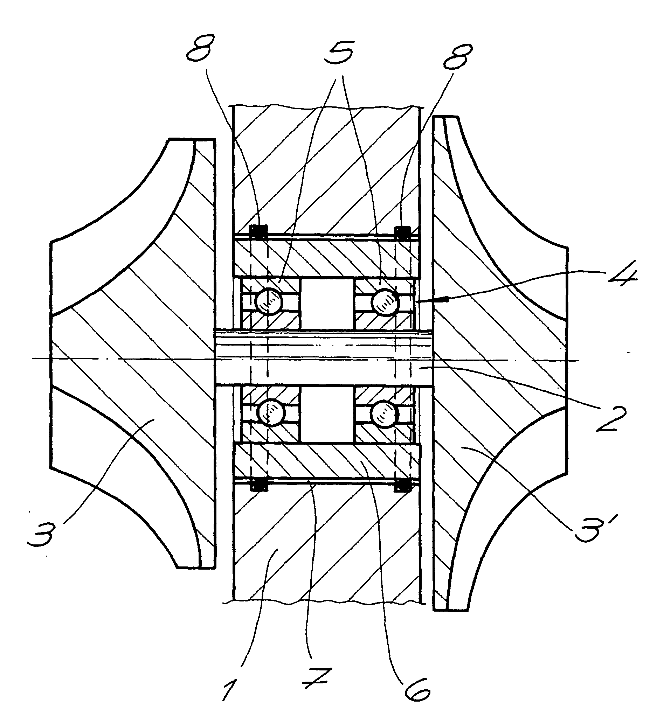

Im Folgenden wird die Erfindung anhand einer lediglich ein Ausführungsbeispiel darstellenden Zeichnung erläutert. Die einzige Figur zeigt schematisch die Lageranordnung einer erfindungsgemäßen Turbomaschine.

Zum grundsätzlichen Aufbau dieser Lageranordnung gehören ein Lagergehäuse 1, eine Rotorwelle 2 mit mindestens einem fliegend angeordneten Laufrad 3 oder 3' sowie ein Wälzlagersatz 4 aus mindestens zwei auf der Rotorwelle 2 angeordneten Hochgenauigkeits-Wälzlagern 5. Im Ausführungsbeispiel ist an einem Wellenende der Rotorwelle 2 ein Rotor 3 für eine Expansionsturbinenstufe und am anderen Wellenende ein Verdichterlaufrad 3' einer Turboverdichterstufe angeschlossen.

Der Wälzlagersatz 4 ist mit minimalem Einbauspiel in einem einteiligen zylindrischen Lagerträger 6 angeordnet. Der Lagerträger 6 ist mit einem radialen Montagespalt 7, der gedämpfte Schwingungsbewegungen zulässt, in einer Lagerbohrung des Lagergehäuses 1 eingesetzt und umfangsseitig an vorgespannten, elastischen Schwingungsdämpfungselementen 8 abgestützt. Im Ausführungsbeispiel und nach bevorzugter Ausführung der Erfindung bestehen die Schwingungsdämpfungselemente 8 aus Elastomerringen, die zwischen dem Lagerträger 6 und dem Lagergehäuse 1 angeordnet sind und den Montagespalt 7 überbrücken. Der Montagespalt 7 kann zusätzlich eine Dämpfungsflüssigkeit enthalten. Im Rahmen der Erfindung liegt es auch, dass der Montagespalt 7 eine oder mehrere ringkanalförmige Vertiefungen für die Dämpfungsflüssigkeit aufweist. Als Dämpfungsflüssigkeit eignen sich viskose Flüssigkeiten, insbesondere Öle.

## Patentansprüche

1. Turbomaschine mit einem auf einer Rotorwelle (2) fliegend angeordneten Laufrad (3, 3') und einer Lageranordnung, wobei die Lageranordnung ein Lagergehäuse (1) und einen Wälzlagersatz (4) aus mindestens zwei auf der Rotorwelle (2) angeordneten Wälzlagern (5) aufweist, die mit minimalem Einbauspiel in einem einteiligen zylindrischen Lagerträger (6) angeordnet sind, und wobei der Lagerträger (6) mit einem radialen Montagespalt (7), der gedämpfte Schwingungsbewegungen zulässt, in einer Lagerbohrung des Lagergehäuses (1) eingesetzt ist und umfangseitig an vorgespannten, elastischen Schwingungsdämpfungselementen (8) abgestützt ist.

2. Turbomaschine nach Anspruch 1, **dadurch gekennzeichnet, dass** zwischen dem Lagerträger (6) und dem Lagergehäuse (1) Elastomerringe, die den Montagespalt überbrücken, als Schwingungsdämpfungselemente (8) angeordnet sind.

3. Turbomaschine nach Anspruch 1 oder 2, **dadurch gekennzeichnet, dass** der Montagespalt (7) eine Dämpfungsflüssigkeit enthält.

4. Turbomaschine nach Anspruch 3, **dadurch gekennzeichnet, dass** der Montagespalt (7) eine oder mehrere ringkanalförmige Vertiefungen für die Dämpfungsflüssigkeit aufweist.

## Claims

1. A turbo machine with an impeller (3, 3') arranged in flying fashion on a rotor shaft (2) and a bearing arrangement, whereby the bearing arrangement exhibits a bearing housing (1) and a roller bearing set (4) consisting of at least two roller bearings (5) arranged on the rotor shaft (2), said bearings being arranged with minimum installation play in a single-piece cylindrical bearing carrier (6), and whereby the bearing carrier (6) is inserted with a radial installation gap (7), which permits dampened oscillation movements, in a bearing hole of the bearing housing (1), and is supported on the circumferential side on pre-tensioned elastic oscillation damping elements (8).

2. The turbo machine according to Claim 1, **characterised in that** elastomer rings are arranged between the bearing carrier (6) and the bearing housing (1), which bridge the installation gap, as oscillation damping elements (8).

3. The turbo machine according to Claim 1 or 2, **characterised in that** the installation gap (7) contains a damping fluid.

4. The turbo machine according to Claim 3, **characterised in that** the installation gap (7) exhibits one or more depressions in annular channel shape for the damping fluid.

## Revendications

1. Turbomachine comportant une roue (3, 3') disposée de manière flottante sur un arbre rotor (2) et un agencement de paliers, l'agencement de paliers présentant un logement de paliers (1) et un jeu de paliers à roulements (4) composé d'au moins deux paliers à roulements (5) disposé sur l'arbre rotor (2), qui sont installés avec un jeu de montage minimal dans un support de paliers cylindrique en une pièce (6) et le support de paliers (6) étant inséré, avec une fente de montage radiale (7) qui permet des mouvements de vibration amortis, dans un alésage de palier du logement de palier (1) et s'appuyant par sa face périphérique sur des éléments amortisseurs de vibrations (8) élastiques précontraints.

2. Turbomachine selon la revendication 1, **caractérisé en ce qu'**entre le support de paliers (6) et le logement de paliers (1) sont disposés en tant qu'éléments amortisseurs de vibrations (8) des anneaux en élastomère qui surplombent la fente de montage.

3. Turbomachine selon la revendication 1 ou 2, **caractérisé en ce que** la fente de montage (7) contient un liquide d'amortissement.

4. Turbomachine selon la revendication 1 ou 2, **caractérisé en ce que** la fente de montage (7) présente un ou plusieurs renfoncements en forme de canaux annulaires pour le liquide d'amortissement.
